# EUROPEAN PATENT APPLICATION

(11) **EP 1 947 777 A2**
(43) Date of publication of application: **23.07.2008**
(21) Application number: 08000567.1
(22) Date of filing: 14.01.2008
(51) Int. Cl.: H04B 1/28, H04B 1/00

(54) **Multi-band RF receiver**

(30) Priority: 19.01.2007 JP 2007010735
(71) Applicant: NEC Electronics Corporation, Kawasaki-shi, Kanagawa 211-8668 (JP)
(72) Inventor: Wang, Jianqin, Kawasaki Kanagawa 211-8668 (JP)
(74) Representative: Glawe, Delfs, Moll

(57) **Abstract**

A first RF receiving path and a second RF receiving path are activated selectively. An interstage filter is connected with the first RF receiving path and the second RF receiving path, and passes a prescribed frequency band of an RF signal output from an active RF receiving path. A frequency converter unit converts a signal output from the interstage filter into an IF signal. A bandwidth of the interstage filter corresponds to a center frequency of an RF signal to be received by the first RF receiving path. The second RF receiving path includes a center frequency shift unit that shifts a center frequency of a received RF signal so that it is included in a frequency band to pass through the interstage filter.

## Description

### BACKGROUND OF THE INVENTION

### 1. Field of the Invention

The present invention relates to a technique of receiving a plurality of kinds of RF signals or satellite positioning signals particularly.

### 2. Description of Related Art

GNSS (Global Navigation Satellite System), such as a car navigation system, which locates a present position on the ground with the use of a satellite that revolves around the earth orbit is increasingly widespread. Typical examples of GNSS are: GPS (Global Positioning System) that is built by the United States, GLONASS that is built by the former Soviet Union, and Galileo that is being developed by European countries.

Japanese Unexamined Patent Application Publication No. 2003-255036 (Fig. 1) discloses a receiving device which receives a satellite positioning signal that is sent from a satellite which constitutes GNSS and thereby calculates a present position. The receiving device performs frequency conversion from an RF (Radio Frequency) signal, which is a satellite positioning signal, into an IF (Intermediate Frequency) signal and further performs A/D (Analog/Digital) conversion from the IF signal into a digital IF signal. Then, a digital processing unit which is composed of a processor such as CPU (Central Processing Unit) performs demodulation of a navigation message or the like on the digital IF signal, thereby locating a present position.

The receiving device which is disclosed in the above patent document receives a satellite positioning signal in a single frequency band. A receiver of a single frequency band generally has a large positioning error due to the effects of the ionosphere, the convective zone and so on. In light of this, it is desired to achieve better performance (e.g. a larger receiving area and a higher positioning accuracy) by receiving and using satellite positioning signals in a plurality of frequency bands.

Given such a background, each GNSS prepares a plurality of frequency bands for commercial uses. For example, in GPS and Galileo, a plurality of frequency bands are accessible for commercial uses as follows.

### GPS:

L1 band (center frequency: 1575.42 MHz, frequency bandwidth: ±1.023 MHz)
L2C band (center frequency: 1227.6 MHz, frequency bandwidth: ±1.023 MHz)
L5C band (center frequency: 1176.45 MHz, frequency bandwidth: ±10.23 MHz) Galileo:
L1 band (center frequency: 1575.42 MHz, frequency bandwidth: ±2.046 MHz)
E5a band (center frequency: 1176.45 MHz, frequency bandwidth: ±10.23 MHz)
E5b band (center frequency: 1207.14 MHz, frequency bandwidth: ±10.23 MHz)
E6 band (center frequency: 1278.75 MHz, frequency bandwidth: ±5.115 MHz)

If satellite positioning signals in both of the Galileo E5a or E5b band and the GPS L1 band can be received, for example, it is possible to cancel out the effects of the ionosphere, the convective zone and so on because the frequency bands of those signals are largely different from each other. This enables highly-accurate positioning. Further, if navigation message data in a plurality of bands can be received, it is possible to select and use optimal data and thereby reduce the effects of phasing due to the ground environment on the positioning accuracy.

If a receiving device has a processing system for each frequency band in order to achieve the reception of signals in a plurality of different frequency bands with one receiving device, the circuit size and cost of the receiving device increase. To solve this drawback, Japanese Unexamined Patent Application Publication No. 2005-207888 discloses a receiving device in which the receiving property of a positioning processing system is changeable, so that when receiving a satellite positioning signal of a particular kind, the receiving property of a positioning processing system is set to the one corresponding to the satellite positioning signal. This technique enables the use of a plurality of kinds of satellite signals with a small-size device.

In an actual positioning processing system, an RF signal which is received via an antenna generally undergoes the following processing before the frequency conversion is performed by a mixer. Firstly, the RF signal passes through an RF bandpass filter so as to remove disturbance outside a desired frequency band and is then input to an RF amplifier. The signal which is amplified by the RF amplifier then passes through an RF bandpass filter, which is called a SAW (Surface Acoustic Wave) filter, so as to further reduce the level of the disturbance outside the desired frequency band. The insertion of bandpass filters in front and behind the RF amplifier is necessary particularly for a positioning processing device to be mounted on a mobile phone.

In a mobile phone which includes a processing system that performs the positioning by receiving a satellite positioning signal, positioning function should operate normally even during the transmission of conversation data. However, given the background that mobile phone manufacturers compete fiercely to develop small-size items in order to meet the demand for the downsizing of mobile phones, it is impossible to set an antenna for telephone call and an antenna for satellite positioning signal reception largely apart from each other, thus posing a limit on the isolation between a transmitting signal and a receiving signal. For example, if a mobile phone transmits a high-power signal such as +27 dbm via an antenna for telephone call, the transmitting signal is attenuated by the amount of the isolation and consequently input as disturbance to a positioning processing system via an antenna for satellite positioning signal reception. The insertion of the above-described filters in front and behind the RF amplifier of a positioning processing system is a measure to eliminate the disturbance. In order to increase the effect of eliminating disturbance and stabilize the operation of a positioning processing system, a narrow bandpass filter should be used particular as an RF bandpass filter which is placed behind the RF amplifier.

The properties (e.g. the frequency band of a filter) of the two RF bandpass filters which are placed in front and behind the RF amplifier are included in the receiving property of a positioning processing system.

The technique which is disclosed in Japanese Unexamined Patent Application Publication No. 2005-207888 changes the receiving property of a positioning processing system according to the kind of a satellite positioning signal. The case of using this technique for receiving a Galileo L1 band signal (center frequency: 1575.42 MHz) and a Galileo E5a band signal (center frequency: 1176.45 MHz), for example, with one receiving device is as follows. If the same RF bandpass filter is used for RF signals in two frequency bands, the RF bandpass filter needs to pass the frequency range of (1176.45-10) MHz to (1575.42+2) MHz, which is not a narrow bandpass filter. Particularly, this reduces the effect of removing disturbance of the RF bandpass filter which is placed behind the RF amplifier in order to remove SAW. On the other hand, if RF bandpass filters having different properties that correspond to the kinds of target satellite positioning signals are prepared and changed for use according to the kind of a satellite positioning signal to be actually received, the number of RF bandpass filters becomes undesirably large. For example, the reception of signals of the above-descried two frequency bands with one receiving device requires the following four RF bandpass filters: two RF bandpass filters (1575.42 ±2 MHz) for the Galileo L1 band signal and two RFbandpass filters (1176.45 ±10 MHz) for the Galileo E5a band signal.

In addition, switches and the control of the switches are necessary to change the four RF bandpass filters, which complicates the device structure.

### SUMMARY

According to one aspect of the present invention, there is provided a multi-band RF receiver that includes a plurality of RF (Radio Frequency) receiving paths to be activated selectively, an RF bandpass filter connected with the plurality of RF receiving paths and configured to pass a prescribed frequency band of an RF signal output from an active RF receiving path, and a frequency converter unit to convert a signal output from the RF bandpass filter into an IF (Intermediate Frequency) signal. An RF receiving path of the plurality of RF receiving paths which receives an RF signal outside the prescribed frequency band includes a center frequency shift unit to shift a center frequency of a received RF signal so as to be included in the prescribed frequency band of the RF bandpass filter.

Implementation of the above aspect as a system or a circuit is also effective as another aspect of the present invention.

The present invention enables the use of different kinds of RF signals with a small size and easily controllable multi-band RF receiver.

### BRIEF DESCRIPTION OF THE DRAWINGS

The above and other objects, advantages and features of the present invention will be more apparent from the following description of certain preferred embodiments taken in conjunction with the accompanying drawings, in which:
Fig. 1 is a view showing a multi-band RF receiver according to a first embodiment of the present invention;
Fig. 2 is a view showing a gain controller in the multi-band RF receiver shown in Fig. 1;
Fig. 3 is a view showing a multi-band RF receiver according to a second embodiment of the present invention;
Fig. 4 is a view showing a gain controller in the multi-band RF receiver shown in Fig.3;
Fig. 5 is a view showing a multi-band RF receiver according to a third embodiment of the present invention;
Fig. 6 is a view to describe the operation of a second RF receiving path in the multi-band RF receiver shown in Fig. 5;
Fig. 7 is a view showing a multi-band RF receiver according to a fourth embodiment of the present invention;
Fig. 8 is a view showing a multi-band RF receiver according to a fifth embodiment of the present invention; and
Fig. 9 is a view to describe the operation of a second RF receiving path in the multi-band RF receiver shown in Fig. 8.

### DETAILED DESCRIPTION OF THE PREFERRED EMBODIMENTS

The invention will now be described herein with reference to illustrative embodiments. Those skilled in the art will recognize that many alternative embodiments can be accomplished using the teachings of the present invention and that the invention is not limited to the embodiments illustrated for explanatory purposes.

Exemplary embodiments of the present invention are described hereinafter with reference to the drawings.

### <First embodiment>

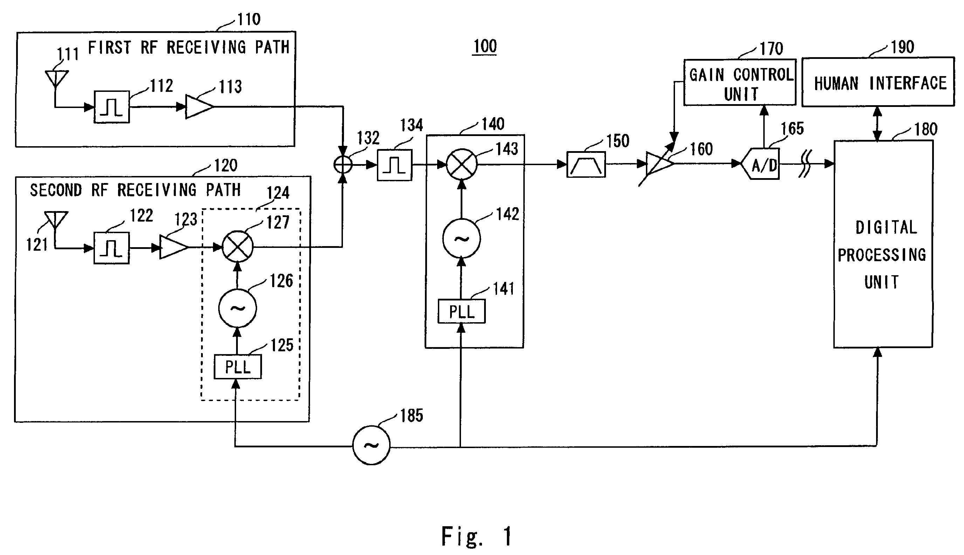

Fig. 1 shows a multi-band RF receiver 100 according to a first embodiment of the present invention. The multi-band RF receiver 100 is a multi-frequency multi-band RF receiver which can selectively receive satellite positioning signals of two different frequency bands in GNSS by changing the setting. The multi-band RF receiver 100 includes a first RF receiving path 110, a second RF receiving path 120, a phase coupler 132, an interstage filter 134, a frequency converter unit 140, an IF bandpass filter 150, a VGA (Variable Gain Amplifier) 160, an A/D converter 165, a gain control unit 170, a digital processing unit 180, a reference signal oscillator 185, and a human interface 190.

As an example, the multi-band RF receiver 100 targets the Galileo L1 band signal (center frequency: 1575.42 MHz, frequency bandwidth: ±2.046 MHz) and the Galileo E5a band signal (center frequency: 1176.45 MHz, frequency bandwidth: ±10.23 MHz).

The first RF receiving path 110 receives the Galileo L1 band signal. The first RF receiving path 110 includes an antenna 111, an RF bandpass filter 112, and an LNA (Low Noise Amplifier) 113. The antenna 111 acquires an RF signal in the relevant band. The RF bandpass filter 112 performs bandpass processing on the RF signal which is acquired by the antenna 111 to filter out a disturbance signal outside a desired frequency band (which is the Galileo L1 band in this case). The LNA 113 amplifies the RF signal which is output from the RF bandpass filter 112.

The second RF receiving path 120 receives the Galileo E5a band signal. The second RF receiving path 120 includes an antenna 121, an RF bandpass filter 122, an LNA 123, and a center frequency shift unit 124. The antenna 121 acquires an RF signal in the relevant band. The RF bandpass filter 122 performs bandpass processing on the RF signal which is acquired by the antenna 121 to filter out a disturbance signal outside a desired frequency band (which is the Galileo E5a band in this case). The LNA 123 amplifies the RF signal which is output from the RF bandpass filter 122. The center frequency shift unit 124 shifts the center frequency of the RF signal which is output from the LNA 123.

The LNA 113 in the first RF receiving path 110 and the LNA 123 and the center frequency shift unit 124 in the second RF receiving path 120 operate exclusively. Specifically, the first RF receiving path 110 and the second RF receiving path 120 do not output an RF signal simultaneously, so that an RF signal is output from either one path at a time. The digital processing unit 180 controls which of the RF receiving paths is activated.

The output ends of the first RF receiving path 110 and the second RF receiving path 120 are connected to the phase coupler 132. The phase coupler 132 supplies the RF signal which is output from the active RF receiving path to the RF bandpass filter 134. The RF bandpass filter 134 removes an unwanted disturbance signal such as an image from the RF signal.

The RF bandpass filter 134 supplies the RF signal which is obtained as a result of the bandpass processing to the frequency converter unit 140. The frequency converter unit 140 performs frequency conversion on the RF signal and supplies an obtained IF signal to the IF bandpass filter 150.

Because the RF bandpass filter 134 is placed between the RF signal stage and the IF signal stage, the RF bandpass filter 134 is referred to as an interstage filter in the description hereinbelow in order to distinguish it from the RF bandpass filter which is placed in front of the LNA in each RF receiving path.

The IF bandpass filter 150 performs bandpass processing on the IF signal which is output from the frequency converter unit 140 and supplies a processed signal to the VGA 160.

The A/D converter 165 converts the IF signal which is output from the IF bandpass filter 150 to a digital signal and supplies it to the digital processing unit 180. The gain control unit 170 that controls the gain of the VGA 160 is connected between the A/D converter 165 and the VGA 160.

The digital processing unit 180 performs demodulation of a navigation message and calculation of a present position using the digital signal which is obtained by the A/D converter 165 and supplies the processing result to the human interface 190.

The human interface 190 includes a device for a user to make various inputs to the multi-band RF receiver 100 and a unit for visually or audially playing back the processing result of the digital processing unit 180. The information which is input by a user includes that an RF signal in a frequency band corresponding to which of the first RF receiving path 110 and the second RF receiving path 120 should be received.

The reference signal oscillator 185 generates an external clock (which is referred to hereinafter as a reference signal) to be used by the digital processing unit 180, the center frequency shift unit 124 in the second RF receiving path 120, and the frequency converter unit 140. The reference signal oscillator 185 is connected with those functional blocks and supplies a reference signal thereto.

The digital processing unit 180 performs control of other functional blocks in addition to the processing of a digital signal which is obtained by the A/D converter 165. The detail of the control is described hereinafter along with the specific operation of each functional block. A control signal and a signal line for transmitting a control signal are not illustrated to simplify the drawings.

As described earlier, the first RF receiving path 110 and the second RF receiving path 120 operate exclusively. The digital processing unit 180 controls the two RF receiving paths according to a selection of a user which is input through the human interface 190 or in such a way that the two RF receiving paths operate alternately.

The first RF receiving path 110 receives the Galileo L1 band signal, and the antenna 111, the RF bandpass filter 112 and the LNA 113 in the first RF receiving path 110 correspond to the Galileo L1 frequency band.

The second RF receiving path 120 receives the Galileo E5a band signal, and the antenna 121, the RF bandpass filter 122 and the LNA 123 in the second RF receiving path 120 correspond to the Galileo E5a frequency band.

Specifically, the RF signal which is output from the LNA 113 in the first RF receiving path 110 is a signal of 1575.42±2.046 MHz, and the RF signal which is output from the LNA 123 in the second RF receiving path 120 is a signal of 1176.45±10.23 MHz.

Although the RF signal from the LNA 113 in the first RF receiving path 110 is directly supplied to the phase coupler 132, the RF signal from the LNA 123 in the second RF receiving path 120 is supplied to the phase coupler 132 after its center frequency is shifted by the center frequency shift unit 124.

The center frequency shift unit 124 in the second RF receiving path 120 includes a PLL (Phase Locked Loop) frequency synthesizer (which is referred to hereinafter simply as PLL) 125, a local oscillator 126 which may be a VCO (Voltage Control Oscillator), and a mixer 127. The center frequency shift unit 124 shifts the center frequency (1176.45 MHz) of the RF signal which is output from the LNA 123 to the center frequency (1575.42 MHz) of the RF signal which is output from the first RF receiving path 110.

The PLL 125 and the local oscillator 126 generate a local signal for shifting the center frequency of the RF signal from the LNA 123 according to the reference signal from the reference signal oscillator 185 and supply the local signal to the mixer 127. The frequency of the local signal which is supplied from the local oscillator 126 to the mixer 127 is 398.97 MHz.

The mixer 127 multiplies the RF signal from the LNA 123 by the local signal from the local oscillator 126, so that the center frequency of the RF signal from the LNA 123 is shifted to a higher frequency by 398.97 MHz, which results in 1575.42 MHz. Thus, the center frequency shift unit 124 is an up-converter which raises the frequency of the RF signal from the LNA 123.

The RF signal from the active RF receiving path is supplied to the interstage filter 134 through the phase coupler 132. The interstage filter 134 further removes disturbance outside a desired frequency band from the RF signal supplied from the RF receiving path, and it preferably has a narrow bandpass.

Because the RF signal from the first RF receiving path 110 and the RF signal from the second RF receiving path 120 both has the center frequency of 1575.42 MHz, the interstage filter 134 corresponds to the frequency of 1575.42 MHz. Since the center frequency of the both RF signals from the two RF receiving paths is 1575.42 MHz, a narrow bandpass filter can be used as the interstage filter 134.

The frequency converter unit 140 is a down-converter which converts the RF signal from the interstage filter 134 into an IF signal. The frequency converter unit 140 includes a PLL 141, a local oscillator 142, and an image rejection mixer 143. The PLL 141 and the local oscillator 142 generate a local signal for frequency-converting the RF signal from the interstage filter 134 into an IF signal according to the reference signal from the reference signal oscillator 185 and supplies the local signal to the image rejection mixer 143. The frequency of the local signal which is supplied from the local oscillator 142 to the image rejection mixer 143 is 1575.42 MHz, which is the same as the center frequency of the RF signal from the interstage filter 134.

The image rejection mixer 143 multiplies the RF signal from the interstage filter 134 by the local signal from the local oscillator 142 to thereby obtain an IF signal. As a result of the multiplication, a disturbance signal with an image frequency which is contained in the RF signal from the interstage filter 134 is removed.

The IF bandpass filter 150, which is a low-pass filter, acquires a low-pass component from the IF signal from the frequency converter unit 140 and supplies it to the VGA 160. In this embodiment, the IF bandpass filter 150 corresponds to a signal with the center frequency of 1575.42 MHz, and its bandwidth is changeable between ±2 MHz and ±10 MHz.

The digital processing unit 180 controls the change of the bandwidth of the IF bandpass filter 150. Specifically, when the first RF receiving path 110 is activated, the bandwidth is set to ±2 MHz, which corresponds to the bandwidth of the RF signal to be received by the first RF receiving path 110. When the second RF receiving path 120 is activated, on the other hand, the bandwidth is set to ±10 MHz, which corresponds to the bandwidth of the RF signal to be received by the second RF receiving path 120.

The signal which is obtained by the IF bandpass filter 150 is supplied to the VGA 160 where it is amplified and then to the A/D converter 165 where it is A/D converted. The gain of the VGA 160 is controlled by the gain control unit 170. The detail of the gain control unit 170 is described hereinbelow.

Generally in a receiving device of a radio signal, a quantization error is smaller as the effective number of bits of a quantizer that is to say an A/D converter is larger, so that the receiving sensitivity becomes higher. The effective number of bits of the A/D converter is affected not only by the number of physical bits of the A/D converter but also by the linearity of an analog signal processing circuit and the amplitude of a signal which is input to the A/D converter. As the linearity of an analog signal processing circuit is higher, a maximum effective number of bits becomes closer to the number of physical bits of the A/D converter. The maximum effective number of bits refers to the effective number of bits when a signal with an input amplitude at which the effective number of bits reaches its maximum where the effective number of bits of the A/D converter varies with the amplitude of an input signal.

In a receiving device which receives signals in the GPS L1 band or the Galileo L1 band, an A/D converter with 2 or more physical bits is often used for higher receiving sensitivity, though an A/D converter with 1 physical bit is also used in some cases. In the multi-band RF receiver 100 of this embodiment, the A/D converter 165 has 2 or more, e.g. 4, physical bits. In this case, it is necessary to maintain the linearity of an IF signal which is input to the A/D converter so that the effective number of bits is close to 4 bits and thereby suppress the distortion of the IF signal.

In an actual receiving device, the level of an RF signal which is acquired via an antenna is highly dependent on the environment in which the receiving device is placed. Therefore, the amplitude of an IF signal which is input to an A/D converter varies largely unless a gain controllable amplifier is placed inside the receiving device. This causes the reduction of the effective number of bits of the A/D converter to deteriorate the sensitivity. Thus, a receiver which uses an A/D converter with 2 or more physical bits needs to include the gain control unit 170 in order to achieve its maximum sensitivity.

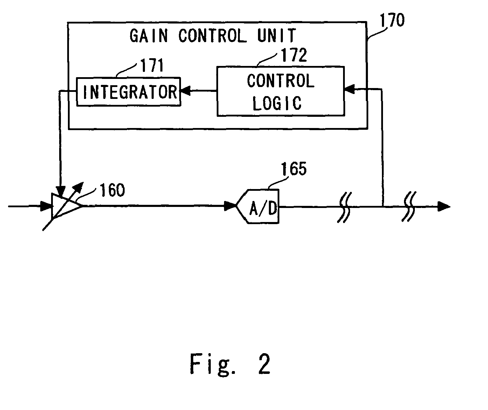

The gain control unit 170 is placed to absorb the variation of the amplitude of an IF signal. The structure of the gain control unit 170 is described hereinafter with reference to Fig. 2.

The gain control unit 170 in this embodiment uses the technique of negative feedback control loop, and it includes an integrator 171 and a control logic 172 as shown in Fig. 2. The control logic 172 performs coding of a digital signal from the A/D converter 165 so that a geometrical average of the amplitude of the IF signal which is input to the A/D converter 165 is constant to thereby obtain a digital AGC (Automatic Gain Control) signal with a variable pulse width and outputs it to the integrator 171.

The integrator 171 smoothes the digital AGC signal from the control logic 172 by performing integration and supplies it as a DC (Direct Current) control signal to a gain control terminal (not shown) of the VGA 160.

The gain control unit 170 controls the amplitude of the IF signal which is input to the A/D converter 165 in such a way that the effective number of bits of the A/D converter equals a maximum number of bits. It is thereby possible to obtain high receiving sensitivity.

Referring back to Fig. 1, the digital signal which is obtained by the A/D converter 165 is supplied to the digital processing unit 180. The detail of the processing such as demodulation of a navigation message performed in the digital processing unit 180 is not described herein.

As described above, in the multi-band RF receiver 100 of this embodiment, the second RF receiving path 120 for receiving an RF signal in the Galileo E5a band includes the center frequency shift unit 124 which shifts the center frequency of the received RF signal to a higher frequency, i.e. to the center frequency (1575.42 MHz) of the RF signal (the Galileo L1 band signal) to be received by the first RF receiving path 110, thereby enabling the reception of two kinds of RF signals with different center frequencies with one interstage filter 134. Further, because the RF signals from the both RF receiving paths have the same center frequency, an RF bandpass filter with a bandwidth that is narrow enough to filter out disturbance (which is the bandwidth of ±10 MHz so as to cover the bandwidth of the above two RF signals in this example), such as a SAW filter, can be used as the interstage filter 134, thereby enabling the effective removal of disturbance such as an image signal. It is thereby possible to achieve the downsizing of a multi-band RF receiver by reducing the number of RF bandpass filters while maintaining the effect of removing disturbance, thus allowing high quality reception which is suitable enough for use in a mobile phone.

Further, when changing a satellite positioning signal to be received, it only needs to change the RF receiving path and the bandwidth of the IF bandpass filter 150. This facilitates the control and simplifies the device configuration.

In the multi-band RF receiver 100 of this embodiment, in order to receive two satellite positioning signals in which both the center frequencies and the bandwidths differ largely, the bandwidth of the IF bandpass filter 150 is changed according to the frequency bandwidth of each satellite positioning signal. However, when receiving two satellite positioning signals in which the bandwidths are substantially the same or differ only slightly while the center frequencies are different, there is no need to change the bandwidth of the IF bandpass filter 150, which further facilitates the control. In the case of receiving two satellite positioning signals in which a difference in the bandwidth is small, the bandwidth of the IF bandpass filter 150 is set to a larger one.

Furthermore, because the multi-band RF receiver 100 of this embodiment adjusts the center frequencies of the RF signals from the two RF receiving paths to be the same, it only requires one frequency converter unit 140, thereby enabling further downsizing of the receiving device.

Although each of the two RF receiving paths receives one kind of satellite positioning signal only in the above description to facilitate understanding, a plurality of kinds of satellite positioning signals having the same center frequency may be received by the same RF receiving path. For example, the first RF receiving path 110 may receive the GPS L1 band signal having the same center frequency in addition to the Galileo L1 band signal. Further, the second RF receiving path 120 may receive the GPS L5C band signal having the same center frequency in addition to the Galileo E5a band signal.

Because the GPS L1 band signal has the frequency of 1575. 42±1 . 023 MHz, the bandwidth of the IF bandpass filter 150 is set to ±1 MHz when receiving the GPS L1 band signal. Further, since a difference between ±2 MHz and ±1 MHz is small, the bandwidth of the IF bandpass filter 150 may be set to ±2 MHz for the Galileo L1 band signal when receiving the GPS L1 band signal. It thus only needs to change the bandwidth of the IF bandpass filter 150 between ±2 MHz and ±10 MHz, which facilitates the control.

In the multi-band RF receiver 100 of this embodiment, the second RF receiving path 120 shifts the center frequency of the received RF signal to the center frequency of the RF signal received by the first RF receiving path 110, so that the center frequency of the RF signal received by the first RF receiving path 110 is a reference frequency. This eliminates the need for placing a center frequency shift unit for shifting the center frequency of the RF signal within the first RF receiving path 110, thus enabling a smaller device size. For example, the interstage filter 134 and the frequency converter unit 140 may be configured to correspond to a predetermined reference frequency and each RF receiving path may include a center frequency shift unit which shifts the center frequency of each RF signal to the reference frequency.

Further, although the multi-band RF receiver 100 of this embodiment receives two satellite positioning signals with different center frequencies to facilitate understanding, the present invention may be applied to a receiving device which receives three or more satellite positioning signals with different center frequencies, in which case the same advantages as the multi-band RF receiver 100 can be obtained.

### <Second embodiment>

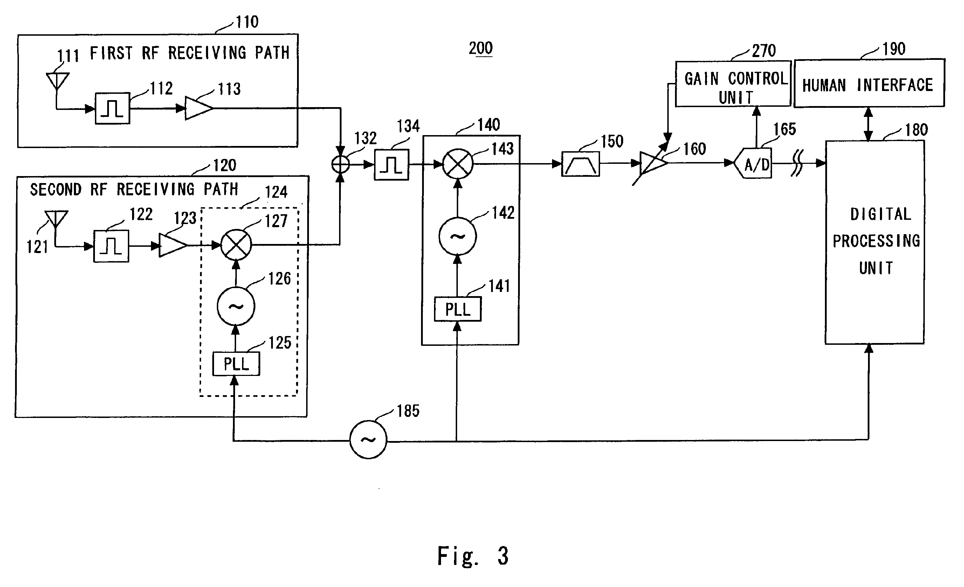

Fig. 3 shows a multi-band RF receiver 200 according to a second embodiment of the present invention. The multi-band RF receiver 200 has the same functional blocks as the multi-band RF receiver 100 except that a gain control unit 270 is different from the gain control unit 170 in the multi-band.RF receiver 100 shown in Fig. 1. Thus, in Fig. 3, the elements having the same configuration or function as those in the multi-band RF receiver 100 shown in Fig. 1 are denoted by the same reference numerals and not described in detail herein.

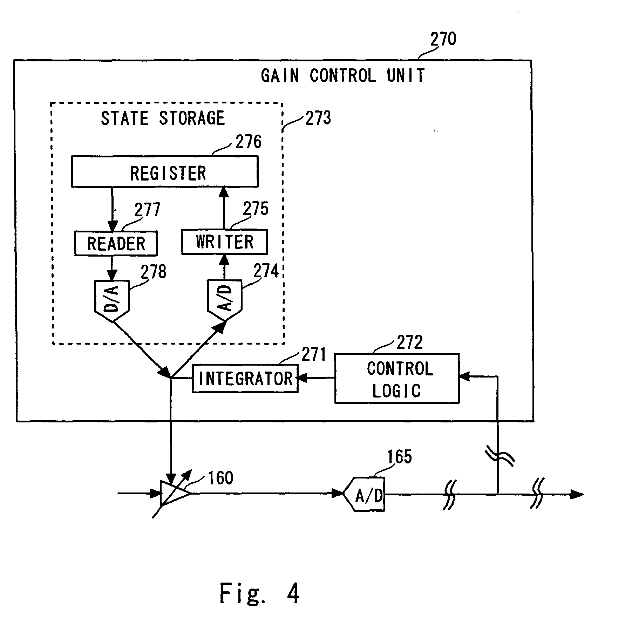

The gain control unit 270 in the multi-band RF receiver 200 shown in Fig. 3 is described hereinafter with reference to Fig. 4.

Like the gain control unit 170 in the multi-band RF receiver 100, the gain control unit 270 controls the gain of the VGA 160 with the use of the technique of negative feedback control loop. As shown in Fig. 4, the gain control unit 270 includes a control logic 272, an integrator 271, and a state storage 273. The control logic 272 and the integrator 271 operate in the same manner as the control logic 172 and the integrator 171, respectively, in the multi-band RF receiver 100.

The integrator 271 smoothes the digital AGC signal from the control logic 272 by performing integration and supplies it as a DC control signal to a gain control terminal (not shown) of the VGA 160. From the start of the operation of the AGC control loop, it takes a longer time than a time constant of the integrator 271 until it is stabilized. In the case of receiving a plurality of kinds of satellite positioning signals by changing the setting as in the multi-band RF receiver 200 of this embodiment, when switching from the receipt of one kind of satellite positioning signal to the receipt of another kind of satellite positioning signal, the gain control unit 170 takes a long time until the AGC control loop is stabilized, and it is necessary to wait until the loop becomes stable. This causes waste power consumption and efficiency degradation.

The state storage 273 of the gain control unit 270 in the multi-band RF receiver 200 is placed to overcome this drawback. As shown in Fig. 4, the state storage 273 includes an A/D converter 274, a writer 275, a register 276, a reader 277, and a D/A converter 278, which are controlled by the digital processing unit 180.

Upon changing the RF receiving path, the digital processing unit 180 controls the state storage 273 to store the state of the AGC control just before the change (specifically, the DC control signal which is output from the integrator 271). When the state storage 273 receives a control signal indicating "state storage" from the digital processing unit 180, the A/D converter 274 converts the DC control signal which is output from the integrator 271 into a digital signal, and the writer 275 writes the digital signal into the register 276. After the RF receiving path is changed, the reader 277 reads the digital signal from the register 276, and the D/A converter 278 converts the digital signal which is read out by the reader 277 into an analog signal and applies it to the gain control terminal of the VGA 160. By the control of the digital processing unit 180, the original AGC control loop is opened during application. After the application, the connection between the state storage 273 and the gain control terminal of the VGA 160 is disconnected so that the AGC control loop is closed.

The multi-band RF receiver 200 of the second embodiment has the same advantage as the multi-band RF receiver 100 of the first embodiment and further enables the rapid stabilization of the AGC control loop in the gain control unit 270 upon changing the RF receiving paths because the gain control unit 270 includes the state storage 273. It is thereby possible to reduce a time loss due to the change of signals to be received, thus suppressing power consumption and increasing the reception efficiency.

### <Third embodiment>

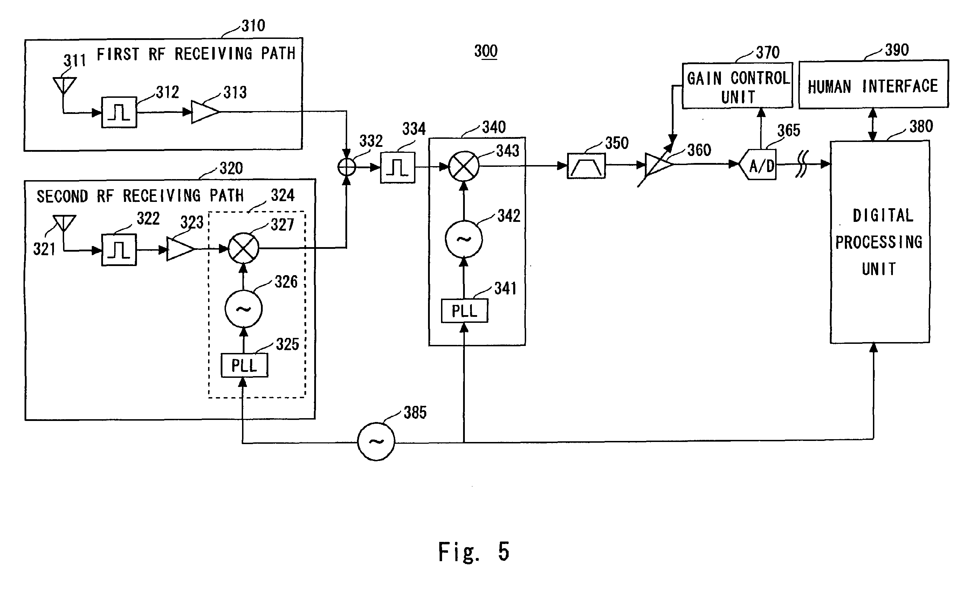

Fig. 5 shows a multi-band RF receiver 300 according to a third embodiment of the present invention. The multi-band RF receiver 300 can selectively receive three kinds of satellite positioning signals with different center frequencies by changing the setting. The multi-band RF receiver 300 includes a first RF receiving path 310, a second RF receiving path 320, a phase coupler 332, an interstage filter 334, a frequency converter unit 340, an IF bandpass filter 350, a VGA 360, an A/D converter 365, a gain control unit 370, a digital processing unit 380, a reference signal oscillator 385, and a human interface 390.

The multi-band RF receiver 300 of this embodiment targets a Galileo L1 band signal (center frequency: 1575.42 MHz, frequency bandwidth: ±2.046 MHz), a GPS L5C band signal (center frequency: 1176.45 MHz, frequency bandwidth: ±10.23 MHz), and a Galileo E5b band signal (center frequency: 1207.14 MHz, frequency bandwidth: ±10.23 MHz).

The first RF receiving path 310 receives the Galileo L1 band signal. The first RF receiving path 310 includes an antenna 311, an RF bandpass filter 312, and an LNA 313. The antenna 311 acquires an RF signal in the relevant band. The RF bandpass filter 312 performs bandpass processing on the RF signal which is acquired by the antenna 311 to filter out a disturbance signal outside the desired frequency band (which is the Galileo L1 band in this case). The LNA 313 amplifies the RF signal which is output from the RF bandpass filter 312.

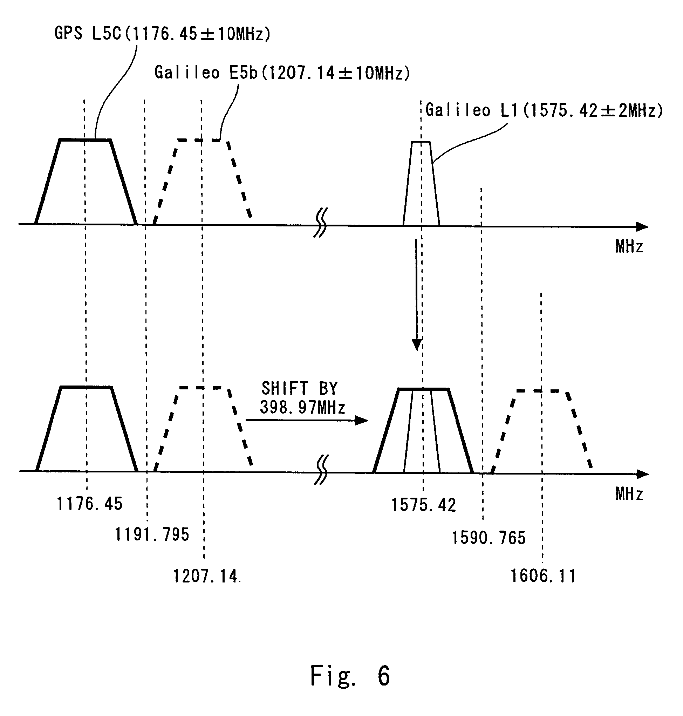

The second RF receiving path 320 receives the GPS L5C band signal and the Galileo E5b band signal. The first RF receiving path 320 includes an antenna 321, an RF bandpass filter 322, an LNA 323, and a center frequency shift unit 324. The antenna 321 can acquire RF signals in those two bands. The RF bandpass filter 322 performs bandpass processing on the RF signal which is acquired by the antenna 321 to filter out a disturbance signal outside the desired frequency band (which is the GPS L5C band and the Galileo E5b band in this case). The LNA 323 amplifies the RF signal which is output from the RF bandpass filter 322. The center frequency shift unit 324 shifts the center frequency of the RF signal which is output from the LNA 323. The frequency bands of three kinds of satellite positioning signals which are received by the first RF receiving path 310 and the second RF receiving path 320 are shown in the upper part of Fig. 6.

The LNA 313 in the first RF receiving path 310 and the LNA 323 and the center frequency shift unit 324 in the second RF receiving path 320 operate exclusively. Specifically, the first RF receiving path 310 and the second RF receiving path 320 do not output an RF signal simultaneously, so that an RF signal is output from either one path at a time. The digital processing unit 380 controls which of the RF receiving paths is activated.

The center frequency shift unit 324 in the second RF receiving path 320 is described hereinbelow. The center frequency shift unit 324 includes a PLL 325, a local oscillator 326, and a mixer 327.

The PLL 325 and the local oscillator 326 generate a local signal for shifting the center frequency of the RF signal from the LNA 323 according to the reference signal from the reference signal oscillator 385 and supply the local signal to the mixer 327. The local signal which is supplied from the local oscillator 326 to the mixer 327 is in-phase with the RF signal which is output from the LNA 323 and has a frequency of 398.97 MHz.

Thus, the center frequency shift unit 324 is an up-converter, which raises the center frequency of the RF signal from the LNA 323 to a higher frequency by 398.97 MHz.

As described earlier, the second RF receiving path 320 receives the GPS L5C band signal and the Galileo E5b band signal, so that the center frequency of the GPS L5C band signal is shifted from 1176.45 MHz to 1575.42 MHz, and the center frequency of the Galileo E5b band signal is shifted from 1207.14 MHz to 1606.11 MHz. Thus, the center frequencies of the RF signals which are output from the second RF receiving path 320 are 1575.42 MHz and 1606.11 MHz, and an average of those center frequencies is 1590.765 MHz. The frequency bands of the RF signals which are output from the first RF receiving path 310 and the second RF receiving path 320 are shown in the lower part of Fig. 6.

The output ends of the first RF receiving path 310 and the second RF receiving path 320 are connected to the phase coupler 332. The phase coupler 332 supplies the RF signal which is output from the active RF receiving path to the interstage filter 334.

The interstage filter 334 further removes disturbance outside a desired frequency band from the RF signal from the RF receiving paths, and it preferably has a narrow bandpass. In this embodiment, the center frequency of the RF signal which is output from the first RF receiving path 310 is 1575.42 MHz, and the center frequencies of the RF signals which are output from the second RF receiving path 320 are 1575.42 MHz and 1606.11 MHz. Thus, a difference between the higher center frequency and the lower center frequency is only 30. 69 MHz. Therefore, a narrow bandpass filter can be used as the interstage filter 334.

The interstage filter 334 supplies the RF signal which is obtained by the bandpass processing to the frequency converter unit 340. The frequency converter unit 340 is a down-converter which converts the RF signal output from the interstage filter 334 into an IF signal. The frequency converter unit 340 includes a PLL 341, a local oscillator 342, and an image rejection mixer 343. The PLL 341 and the local oscillator 342 generate a local signal for frequency-converting the RF signal from the interstage filter 334 into an IF signal according to the reference signal from the reference signal oscillator 385 and supplies the local signal to the image rejection mixer 343. The frequency of the local signal which is supplied from the local oscillator 342 to the image rejection mixer 343 is 1590.765 MHz, which is the same as the average of the center frequencies of the two RF signals that are output from the second RF receiving path 320.

In the multi-band RF receiver 300 of this embodiment, the image rejection mixer 343 of the frequency converter unit 340 is configured so that it can change the use of an upper side and a lower side of a local signal from the local oscillator 342. The change is also controlled by the digital processing unit 380.

As described earlier, the center frequency of the RF signal which is output from the first RF receiving path 310 is 1575.42 MHz, and the center frequencies of the RF signals which are output from the second RF receiving path 320 are 1575.42 MHz and 1606.11 MHz. If the image rejection mixer 343 is set to the upper side, the RF signal of 1606.11 MHz is converted into an IF signal of 16.345 MHz. On the other hand, if the image rejection mixer 343 is set to the lower side, the RF signal of 1575.42 MHz is converted into an IF signal of 16.345 MHz.

The digital processing unit 380 controls the two RF receiving paths and the image rejection mixer 343 as follows according to which satellite positioning signal is received.
A. When receiving the Galileo L1 band signal, the first RF receiving path 310 is activated, and the image rejection mixer 343 is set to the lower side.
B. When receiving the GPS L5C band signal, the second RF receiving path 320 is activated, and the image rejection mixer 343 is set to the lower side.
C. When receiving the Galileo E5b band signal, the second RF receiving path 320 is activated, and the image rejection mixer 343 is set to the upper side.

By such settings, the same image rejection mixer 343 can be used in common when receiving any of the three signals in the Galileo L1 band, the GPS L5C band, and the Galileo E5b band.

Further, because the IF signal which is output from the image rejection mixer 343 has a frequency of 15.345 MHz for the RF signals in any frequency band, the same IF bandpass filter 350 can be used in common.

The IF bandpass filter 350 corresponds to 15.345 MHz, and its bandwidth is changed by the digital processing unit 380 between ±2 MHz and ±10 MHz according to the bandwidth of the RF signal to be received.

The VGA 360, the A/D converter 365 and the gain control unit 370 in the IF signal processing stage, and the reference signal oscillator 385 and the human interface 390 are the same as the equivalent functional blocks in the multi-band RF receiver 100 and thus not described in detail herein.

As described above, in the multi-band RF receiver 300 of the third embodiment, the second RF receiving path 320 receives signals in two frequency bands and shifts the frequency of the RF signal to a higher level so that the center frequencies of the received two RF signals are distributed on both sides of the local signal of the frequency converter unit 340. The digital processing unit 380 sets the image rejection mixer 343 to the upper side or the lower side depending on which of the two satellite positioning signals is received. Consequently, when receiving one signal, which is the Galileo E5b band signal for example, the other signal, which is the GPS L5C band signal, is suppressed as a disturbance signal. On the other hand, when receiving the GPS L5C band signal, the Galileo E5b band signal is suppressed as a disturbance signal.

It is thereby possible to selectively receive two satellite positioning signals with different, but not very divergent, center frequencies with one RF receiving path while maintaining the anti-disturbance capacity of the receiving device.

The effect of receiving a plurality of satellite positioning signals with different center frequencies with one interstage filter 334 or the like is the same as that of the multi-band RF receiver 100.

Although the first RF receiving path 310 receives the Galileo L1 band signal only in the above description to facilitate understanding, the GPS L1 band signal having the same center frequency as the Galileo L1 band signal can be also received. This is the same for the second RF receiving path 320, and the Galileo E5a band signal having the same center frequency as the GPS L5C band signal can be received as well. Thus, the multi-band RF receiver 300 is capable of receiving five kinds of satellite positioning signals with a small device size.

### <Fourth embodiment>

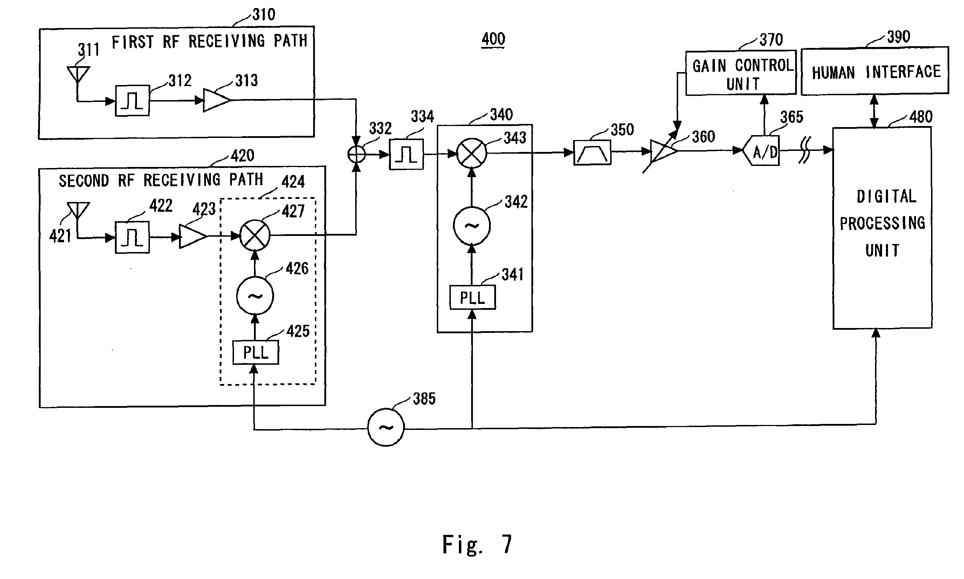

Fig. 7 shows a multi-band RF receiver 400 according to a fourth embodiment of the present invention. The multi-band RF receiver 400 modifies the multi-band RF receiver 300 of the third embodiment so as to receive satellite positioning signals in all the GPS frequency bands and satellite positioning signals in all the Galileo frequency bands. The multi-band RF receiver 400 has two RF receiving paths. The functional blocks of the multi-band RF receiver 400 are the same as the equivalents of the multi-band RF receiver 300 shown in Fig. 5 except that a second RF receiving path 420 is different from the second RF receiving path 320 in the multi-band RF receiver 300 and that the control performed by a digital processing unit 480 is partly different from the control performed by the digital processing unit 380 in the multi-band RF receiver 300. Thus, in Fig. 7, the elements having the same configuration or function as those in the multi-band RF receiver 300 shown in Fig. 5 are denoted by the same reference numerals and not described in detail herein.

Focus firstly on the center frequencies of the GPS and Galileo band signals. The center frequencies of the GPS L1 band signal and the Galileo L1 band signal are 1575.42 MHz, and the center frequencies of the other band signals are within the range of 1176.45 MHz to 1278.6 MHz. The former is classified as a first group, and the latter as a second group. The multi-band RF receiver 400 of the fourth embodiment receives the signals of the first group with the same RF receiving path as the first RF receiving path 310 in the multi-band RF receiver 300, and receives the signals of the second group with the other RF receiving path, which is the second RF receiving path 420.

The second RF receiving path 420 includes an antenna 421, an RF bandpass filter 422, an LNA 423, and a center frequency shift unit 424. The antenna 421 can acquire each signal of the second group. The RF bandpass filter 422 performs bandpass processing on the RF signal which is acquired by the antenna 421 to filter out a disturbance signal outside a desired frequency band (which is the frequency bands of all the signals in the second group in this case). The LNA 423 amplifies the RF signal which is output from the RF bandpass filter 422. The center frequency shift unit 424 shifts the center frequency of the RF signal which is output from the LNA 423.

The LNA 313 in the first RF receiving path 310 and the LNA 423 and the center frequency shift unit 424 in the second RF receiving path 420 operate exclusively. Specifically, the first RF receiving path 310 and the second RF receiving path 420 do not output an RF signal simultaneously, so that an RF signal is output from either one path at a time. The digital processing unit 480 controls which of the RF receiving paths is activated. Further, the second RF receiving path 420 selectively receives a plurality of RF signals with different center frequencies, and the digital processing unit 480 also controls which of the plurality of RF signals is received.

As described earlier in the explanation of the multi-band RF receiver 300, the image rejection mixer 343 of the frequency converter unit 340 is configured so that it can change the use of an upper side and a lower side of a local signal from the local oscillator 342. The change is also controlled by the digital processing unit 480.

The center frequency shift unit 424 in the second RF receiving path 420 includes a PLL 425, a local oscillator 426, and a mixer 427, and it shifts the center frequency of the received RF signal so as to correspond to the upper side or the lower side of the image rejection mixer 343 in the frequency converter unit 340. The digital processing unit 480 controls the shift by changing the frequency of the local signal which is generated by the PLL 425 and the local oscillator 426 according to the kind of the RF signal to be received.

The digital processing unit 480 controls the generation of the local signal by the PLL 425 and the local oscillator 426 so that the center frequencies of the RF signals which are output from the second RF receiving path 420 are distributed on both sides of the frequency (1590.765 MHz) of the local signal of the frequency converter unit 340. A specific way of control is as follows.
A. When receiving one of the GPS L5C band signal (center frequency: 1176.45 MHz), the Galileo E5a band signal (center frequency: 1176.45 MHz), and the Galileo E5b band signal (center frequency: 1207.14 MHz), a local signal with a frequency of 398.97 MHz is generated.
   The center frequencies of the RF signals in the GPS L5C band and the Galileo E5a band are thereby shifted to 1575.42 MHz, and the center frequency of the RF signal in the Galileo E5b band is thereby shifted to 1606.11 MHz.
B. When receiving the GPS L2C band signal (center frequency: 1227.6 MHz), a local signal with a frequency of 347.82 MHz is generated.
   The center frequency of the RF signal in the GPS L2C band is thereby shifted to 1575.42 MHz.
C. When receiving the Galileo E6 band signal (center frequency: 1278.75 MHz), a local signal with a frequency of 296.97 MHz is generated.
   The center frequency of the RF signal in the Galileo E6 band is thereby shifted to 1575.72 MHz.

In this configuration, the center frequency of the RF signal which is output from the first RF receiving path 310 in the multi-band RF receiver 400 is 1575.42 MHz, and the center frequency of the RF signal which is output from the second RF receiving path 420 in the multi-band RF receiver 400 is either 1575.42 MHz or 1606.11 MHz, so that a difference in the center frequency of the RF signals is small. It is thereby possible to use the interstage filter 334 with a narrow bandpass.

The control of the image rejection mixer 343 and the IF bandpass filter 350 by the digital processing unit 480 is not described herein.

As described above, the multi-band RF receiver 400 of this embodiment is capable of selectively receiving signals in all GPS and Galileo frequency bands with a small device size.

### <Fifth embodiment>

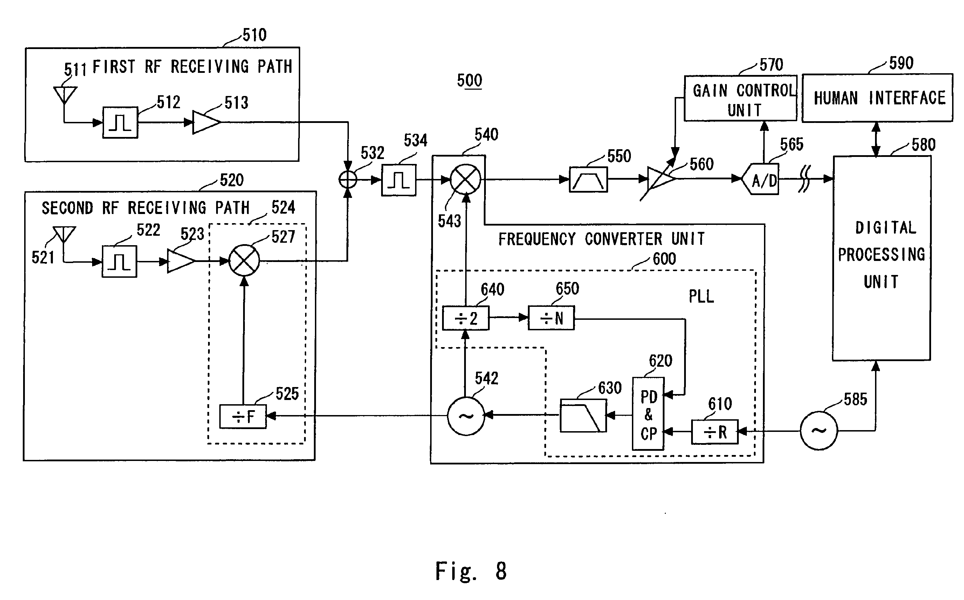

Fig. 8 shows a multi-band RF receiver 500 according to a fifth embodiment of the present invention. Like the multi-band RF receiver 300 of the third embodiment, the multi-band RF receiver 500 selectively receives three kinds of satellite positioning signals with different center frequencies (the Galileo L1 band, the GPS L5C band, and the Galileo E5b band) by changing the settings. The multi-band RF receiver 500 includes a first RF receiving path 510, a second RF receiving path 520, a phase coupler 532, an interstage filter 534, a frequency converter unit 540, an IF bandpass filter 550, a VGA 560, an A/D converter 565, a gain control unit 570, a digital processing unit 580, a reference signal oscillator 585, and a human interface 590.

The first RF receiving path 510 receives the Galileo L1 band signal. The first RF receiving path 510 includes an antenna 511, an RF bandpass filter 512, and an LNA 513. The antenna 511 acquires an RF signal in the relevant band. The RF bandpass filter 512 performs bandpass processing on the RF signal which is acquired by the antenna 511 to filter out a disturbance signal outside a desired frequency band (which is the Galileo L1 band in this case). The LNA 513 amplifies the RF signal which is output from the RF bandpass filter 512.

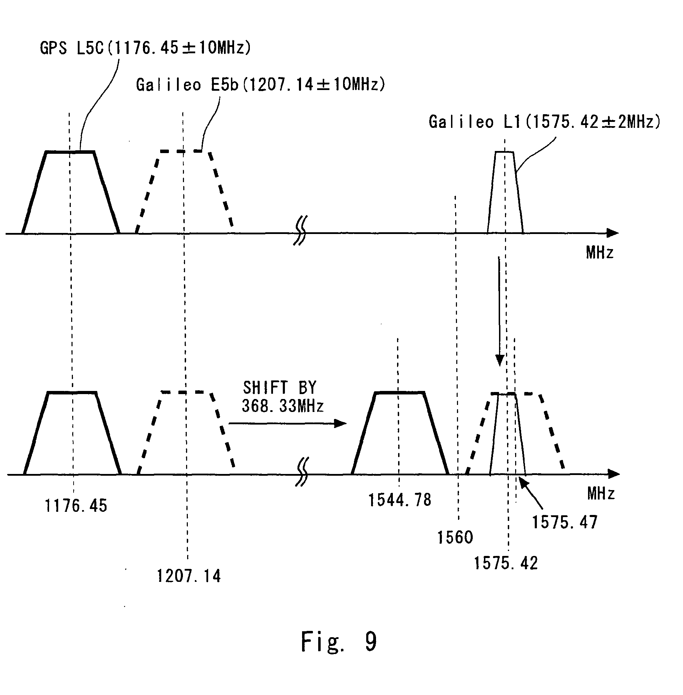

The second RF receiving path 520 receives the GPS L5C band signal and the Galileo E5b band signal. The first RF receiving path 520 includes an antenna 521, an RF bandpass filter 522, an LNA 523, and a center frequency shift unit 524. The antenna 521 can acquire RF signals in those two bands. The RF bandpass filter 522 performs bandpass processing on the RF signal which is acquired by the antenna 521 to filter out a disturbance signal outside a desired frequency band (which is the GPS L5C band and the Galileo E5b band in this case). The LNA 523 amplifies the RF signal which is output from the RF bandpass filter 522. The center frequency shift unit 524 shifts the center frequency of the RF signal which is output from the LNA 523. The frequency bands of the three kinds of satellite positioning signals which are received by the first RF receiving path 510 and the second RF receiving path 520 are shown in the upper part of Fig. 9.

The LNA 513 in the first RF receiving path 510 and the LNA 523 and the center frequency shift unit 524 in the second RF receiving path 520 operate exclusively. Specifically, the first RF receiving path 510 and the second RF receiving path 520 do not output an RF signal simultaneously, so that an RF signal is output from either one path at a time. The digital processing unit 580 controls which of the RF receiving paths is activated.

The center frequency shift unit 524 in the second RF receiving path 520 is described hereinbelow. The center frequency shift unit 524 includes a frequency divider 525 and a mixer 527.

The frequency divider 525 divides a signal from a local oscillator 542 in a frequency converter unit 540, which is described later, to thereby obtain a local signal for shifting a center frequency and supplies it to the mixer 527. Because the oscillation frequency of the local oscillator 542 is fixed to 3120 MHz and the frequency division number of the frequency divider 525 is fixed to 144/17 as described in detail later, the frequency of the local signal which is supplied from the frequency divider 525 to the mixer 527 is about 368.33 MHz.

The mixer 527 multiplies the local signal which is supplied from the frequency divider 525 by the RF signal which is output from the LNA 523, thereby shifting the center frequency of the RF signal from the LNA 524 to a higher frequency by 368.33 MHz.

As described earlier, the second RF receiving path 520 receives the GPS L5C band signal and the Galileo E5b band signal. When receiving the GPS L5C band signal, the center frequency shift unit 524 shifts its center frequency from 1176. 45 MHz to 1544.78 MHz. When receiving the Galileo E5b band signal, the center frequency shift unit 524 shifts its center frequency from 1207.14 MHz to 1575.47 MHz. Thus, the center frequency of the RF signal which is output from the second RF receiving path 520 is 1544.78 MHz or 1575.47 MHz.

The frequency bands of the RF signals which are output from the first RF receiving path 510 and the second RF receiving path 520 are shown in the lower part of Fig. 9.

The output ends of the first RF receiving path 510 and the second RF receiving path 520 are connected to the phase coupler 532. The phase coupler 532 supplies the RF signal which is output from the active RF receiving path to the interstage filter 534.

As shown in the lower part of Fig. 9, the center frequency of the RF signal which is output from the first RF receiving path 510 is 1575.42 MHz, and the center frequencies of the RF signals which are output from the second RF receiving path 520 are 1544.78 MHz and 1575.47 MHz. Thus, a difference between the higher center frequency and the lower center frequency is only 20.69 MHz. Therefore, a narrow bandpass filter can be used as the interstage filter 534.

The interstage filter 534 supplies the RF signal which is obtained by the bandpass processing to the frequency converter unit 540. The frequency converter unit 540 is a down-converter which converts the RF signal output from the interstage filter 534 into an IF signal. The frequency converter unit 540 includes a PLL 600, a local oscillator 542, and an image rejection mixer 543. The PLL 600 and the local oscillator 542 generate a local signal for frequency-converting the RF signal from the interstage filter 534 into an IF signal according to the reference signal from the reference signal oscillator 585 and supplies the local signal to the image rejection mixer 543.

The PLL 600 includes a frequency divider 610, a PD&CP (Phase Detector & Charge Pump) 620, a loop filter 630, a frequency divider 640, and a frequency divider 650. The frequency divider 610 divides the reference signal from the reference signal oscillator 585 and supplies the result to the PD&CP 620. The PD&CP 620 detects a phase difference between the signals from the frequency divider 610 and the frequency divider 650 and outputs a signal having a pulse width corresponding to the detected phase difference. The loop filter 630 generates a DC voltage corresponding to the pulse width of the signal from the PD&CP 620 and supplies it to the local oscillator 542. The local oscillator 542, which is a voltage control oscillator, generates a signal having a frequency corresponding to the DC voltage from the loop filter 630 and supplies it to the frequency divider 640 and the frequency divider 525 in the center frequency shift unit 524. The frequency divider 640 divides the signal from the local oscillator 542 by two to thereby obtain a local signal with a frequency which is half the oscillation frequency of the local oscillator 542. The frequency divider 640 also generates, as a local signal, a four-phase signal with relative phase differences of 0, 90, 180 and 270 degrees and with the same frequency.

In the multi-band RF receiver 500 of this embodiment, the digital processing unit 580 controls the PLL 600 so that the oscillation frequency of the local oscillator 542 is fixed to 3120 MHz. Therefore, the frequency of the reference signal which is generated by the reference signal oscillator 585 is set to one, two, or four times of 13 MHz. Further, the frequency of the local signal which is obtained by the frequency divider 640 and input to the image rejection mixer 543 is 1650 MHz.

The RF signal which is output from the first RF receiving path 510 or the second RF receiving path 520 is supplied to the interstage filter 534 through the phase coupler 532. The RF signal is bandpass-processed by the interstage filter 534 and supplied to the frequency converter unit 540. The image rejection mixer 543 in the frequency converter unit 540 converts the RF signal from the interstage filter 534 into an IF signal with the use of either upper side or lower side of the local signal from the frequency divider 640. The digital processing unit 580 controls which of the upper side and the lower side of the local signal is used by the image rejection mixer 543 according to the kind of the RF signal. Specifically, when the frequency of the RF signal from the interstage filter 534 is lower than the frequency (1650 MHz) of the local signal from the frequency divider 640 (which is when receiving the GPS L5C band signal in this example), the lower side of the local signal is used. On the other hand, when it is higher than 1650 MHz (which is when receiving the Galileo L1 or E5b band signal in this example), the upper side of the local signal is used.

In this configuration, when the second RF receiving path 520 is activated to receive the GPS L5C band signal, the center frequency of the RF signal which is output from the interstage filter 534 is 1544.78 MHz. In this case, the image rejection mixer 543 of the frequency converter unit 540 converts the RF signal into an IF signal by using the lower side of the local signal from the frequency divider 640, so that the center frequency of the IF signal which is output from the frequency converter unit 540 is 15.22 MHz.

When the second RF receiving path 520 is activated to receive the Galileo E5b band signal, the center frequency of the RF signal which is output from the interstage filter 534 is 1575.47 MHz. In this case, the image rejection mixer 543 converts the RF signal into an IF signal by using the upper side of the local signal from the frequency divider 640, so that the center frequency of the IF signal is 15.47 MHz.

When the first RF receiving path 510 is activated to receive the Galileo L1 band signal, the center frequency of the RF signal which is output from the interstage filter 534 is 1575.42 MHz. In this case, the image rejection mixer 543 converts the RF signal into an IF signal by using the upper side of the local signal from the frequency divider 640, so that the center frequency of the IF signal is 15.45 MHz.

Thus, the center frequencies of the IF signals which are obtained by the frequency converter unit 540 are 15.22 MHz, 15.45 MHz and 15.47 MHz for the three kinds of satellite positioning signals. Because a difference in the center frequency among those IF signals is small, the same IF bandpass filter 550 can be used in common.

Since a difference in the center frequency among the three IF signals is small, the use of a resampler when processing a digital signal in the digital processing unit 580 facilitates the processing.

The IF bandpass filter 550, the VGA 560, the A/D converter 565, the gain control unit 570 and the human interface 590 are the same as the equivalents in any of the multi-band RF receivers 100 to 400 and thus not described in detail herein.

As described above, the multi-band RF receiver 500 of this embodiment has the same advantages as the multi-band RF receiver 300 of the third embodiment and also enables further downsizing of a device because the center frequency shift unit 524 is composed only of the frequency divider 525 and the mixer 527.

The multi-band RF receivers of the above-described embodiments enable the downsizing of a device because they require a smaller number of filters when receiving a plurality of kinds of RF signals with different center frequencies. Further, because the multi-band RF receivers allow the use of a narrow bandpass filter as an RF filter behind an RF amplifier in an RF receiving path, they have a high anti-disturbance capacity, which is particularly suitable for use in communication equipment that perform high-power transmission, such as a mobile phone.

It is apparent that the present invention is not limited to the above embodiments, but may be modified and changed without departing from the scope and spirit of the invention.

## Claims

1. A multi-band RF receiver comprising:
a plurality of RF (Radio Frequency) receiving paths to be activated selectively;
an RF bandpass filter connected with the plurality of RF receiving paths and configured to pass a prescribed frequency band of an RF signal output from an active RF receiving path; and
a frequency converter unit to convert a signal output from the RF bandpass filter into an IF (Intermediate Frequency) signal, wherein
an RF receiving path of the plurality of RF receiving paths to receive an RF signal outside the prescribed frequency band includes a center frequency shift unit to shift a center frequency of a received RF signal so as to be included in the prescribed frequency band of the RF bandpass filter.

2. The multi-band RF receiver according to claim 1, wherein
the plurality of RF receiving paths respectively receive a plurality of RF signals with different center frequencies,
the prescribed frequency band centers on a prescribed reference frequency, and
the center frequency shift unit shifts a center frequency of a received RF signal to the reference frequency.

3. The multi-band RF receiver according to claim 2, wherein
the reference frequency is a center frequency of an RF signal received by one of the plurality of RF receiving paths.

4. The multi-band RF receiver according to claim 2, further comprising:
an IF bandpass filter configured to pass a prescribed frequency band of an IF signal obtained by the frequency converter unit, a bandwidth of the IF bandpass filter being changeable according to a bandwidth of a received RF signal.

5. The multi-band RF receiver according to claim 3,
an IF bandpass filter configured to pass a prescribed frequency band of an IF signal obtained by the frequency converter unit, a bandwidth of the IF bandpass filter being changeable according to a bandwidth of a received RF signal.

6. The multi-band RF receiver according to claim 1, wherein
the RF receiving path including the center frequency shift unit is configured to selectively receive a plurality of RF signals with different center frequencies to be included in the prescribed frequency band by the shift.

7. The multi-band RF receiver according to claim 6, wherein
the frequency converter unit includes a mixer to multiply a signal output from the RF bandpass filter by a frequency conversion local signal, and
the mixer is configured to selectively use one of an upper side and a lower side of a frequency conversion local signal by using the upper side of the frequency conversion local signal when a center frequency of a signal output from the RF bandpass filter is higher than a frequency of the frequency conversion local signal and using the lower side of the frequency conversion local signal when a center frequency of a signal output from the RF bandpass filter is lower than a frequency of the frequency conversion local signal.

8. The multi-band RF receiver according to claim 7, wherein
the center frequency shift unit includes:
a shift local signal generator to generate a center frequency shift local signal; and
a mixer to multiply the center frequency shift local signal generated by the shift local signal generator by a received RF signal, and
the shift local signal generator is configured to generate center frequency shift local signals respectively corresponding to center frequencies of the plurality of RF signals so that shifted center frequencies of the plurality of RF signals are distributed on both sides of a frequency of the frequency conversion local signal.

9. The multi-band RF receiver according to claim 8, wherein
the shift local signal generator includes:
a PLL (Phase Locked Loop); and
a voltage control oscillator.

10. The multi-band RF receiver according to claim 6, wherein
the center frequency shift unit includes:
a shift local signal generator to generate a center frequency shift local signal; and
a mixer to multiply the center frequency shift local signal generated by the shift local signal generator by a received RF signal,
the frequency converter unit includes:
a frequency conversion local signal generator to generate a frequency conversion local signal; and
a mixer to multiply the frequency conversion local signal generated by the frequency conversion local signal generator by a signal from the RF bandpass filter,
the frequency conversion local signal generator includes:
a PLL (Phase Locked Loop); and
a voltage control oscillator, and
the shift local signal generator is a frequency divider to divide a signal from the voltage control oscillator in the frequency conversion local signal generator.

11. The multi-band RF receiver according to claim 7, wherein
the center frequency shift unit includes:
a shift local signal generator to generate a center frequency shift local signal; and
a mixer to multiply the center frequency shift local signal generated by the shift local signal generator by a received RF signal,
the frequency converter unit includes:
a frequency conversion local signal generator to generate a frequency conversion local signal; and
a mixer to multiply the frequency conversion local signal generated by the frequency conversion local signal generator by a signal from the RF bandpass filter,
the frequency conversion local signal generator includes:
a PLL (Phase Locked Loop); and
a voltage control oscillator, and
the shift local signal generator is a frequency divider to divide a signal from the voltage control oscillator in the frequency conversion local signal generator.

12. The multi-band RF receiver according to claim 1, further comprising:
a variable gain amplifier to amplify the IF signal;
an A/D converter to convert a signal obtained by the variable gain amplifier into a digital signal; and
a gain controller to supply a control value corresponding to an output of the A/D converter to a gain control terminal of the variable gain amplifier, the gain controller implementing negative feedback control loop, wherein
the gain controller includes a state storage to store the control value upon change of an RF signal to be received and read the control value and supply the control value to the gain control terminal after the change.

13. The multi-band RF receiver according to claim 2, wherein
a variable gain amplifier to amplify the IF signal;
an A/D converter to convert a signal obtained by the variable gain amplifier into a digital signal; and
a gain controller to supply a control value corresponding to an output of the A/D converter to a gain control terminal of the variable gain amplifier, the gain controller implementing negative feedback control loop, wherein
the gain controller includes a state storage to store the control value upon change of an RF signal to be received and read the control value and supply the control value to the gain control terminal after the change.

14. The multi-band RF receiver according to claim 3, wherein
a variable gain amplifier to amplify the IF signal;
an A/D converter to convert a signal obtained by the variable gain amplifier into a digital signal; and
a gain controller to supply a control value corresponding to an output of the A/D converter to a gain control terminal of the variable gain amplifier, the gain controller implementing negative feedback control loop, wherein
the gain controller includes a state storage to store the control value upon change of an RF signal to be received and read the control value and supply the control value to the gain control terminal after the change.

15. The multi-band RF receiver according to claim 4, wherein
a variable gain amplifier to amplify the IF signal;
an A/D converter to convert a signal obtained by the variable gain amplifier into a digital signal; and
a gain controller to supply a control value corresponding to an output of the A/D converter to a gain control terminal of the variable gain amplifier, the gain controller implementing negative feedback control loop, wherein
the gain controller includes a state storage to store the control value upon change of an RF signal to be received and read the control value and supply the control value to the gain control terminal after the change.

16. The multi-band RF receiver according to claim 5, wherein
a variable gain amplifier to amplify the IF signal;
an A/D converter to convert a signal obtained by the variable gain amplifier into a digital signal; and
a gain controller to supply a control value corresponding to an output of the A/D converter to a gain control terminal of the variable gain amplifier, the gain controller implementing negative feedback control loop, wherein
the gain controller includes a state storage to store the control value upon change of an RF signal to be received and read the control value and supply the control value to the gain control terminal after the change.

17. The multi-band RF receiver according to claim 6, wherein
a variable gain amplifier to amplify the IF signal;
an A/D converter to convert a signal obtained by the variable gain amplifier into a digital signal; and
a gain controller to supply a control value corresponding to an output of the A/D converter to a gain control terminal of the variable gain amplifier, the gain controller implementing negative feedback control loop, wherein
the gain controller includes a state storage to store the control value upon change of an RF signal to be received and read the control value and supply the control value to the gain control terminal after the change.

18. The multi-band RF receiver according to claim 7, wherein
a variable gain amplifier to amplify the IF signal;
an A/D converter to convert a signal obtained by the variable gain amplifier into a digital signal; and
a gain controller to supply a control value corresponding to an output of the A/D converter to a gain control terminal of the variable gain amplifier, the gain controller implementing negative feedback control loop, wherein
the gain controller includes a state storage to store the control value upon change of an RF signal to be received and read the control value and supply the control value to the gain control terminal after the change.

19. The multi-band RF receiver according to claim 8, wherein
a variable gain amplifier to amplify the IF signal;
an A/D converter to convert a signal obtained by the variable gain amplifier into a digital signal; and
a gain controller to supply a control value corresponding to an output of the A/D converter to a gain control terminal of the variable gain amplifier, the gain controller implementing negative feedback control loop, wherein
the gain controller includes a state storage to store the control value upon change of an RF signal to be received and read the control value and supply the control value to the gain control terminal after the change.

20. The multi-band RF receiver according to claim 9, wherein
a variable gain amplifier to amplify the IF signal;
an A/D converter to convert a signal obtained by the variable gain amplifier into a digital signal; and
a gain controller to supply a control value corresponding to an output of the A/D converter to a gain control terminal of the variable gain amplifier, the gain controller implementing negative feedback control loop, wherein
the gain controller includes a state storage to store the control value upon change of an RF signal to be received and read the control value and supply the control value to the gain control terminal after the change.
